# EUROPÄISCHE PATENTANMELDUNG

(11) **EP 0 614 060 A1**
(43) Veröffentlichungstag der Anmeldung: **07.09.1994**
(21) Anmeldenummer: 94100686.8
(22) Anmeldetag: 18.01.1994
(51) Int. Cl.: F27B 1/16, C21B 11/02

(54) **Verfahren und Einrichtung zum Schmelzen von eisenmetallischen Werkstoffen**

(30) Priorität: 20.01.1993 DE 4301322
(71) Anmelder: INGITEC BÜROGEMEINSCHAFT FÜR GIESSEREITECHNIK GbR, D-04179 Leipzig (DE)
(72) Erfinder: Feustel, Hans Ulrich, Dipl.-Ing., D-04277 Leipzig (DE); Schaaf, Michael, Dipl.-Krist., D-04430 Rückmarsdorf (DE); Mallon, Joachim, Dipl.-Phys., D-04157 Leipzig (DE); Ruschitzka, Ludwig, Dr.-Ing., D-09633 Halsbrücke (DE); Köhler, Karl-Heinz, D-07985 Elsterberg (DE); Neumann, Gerhard, Dr.-Ing., D-09599 Freiberg/Sa. (DE); Wilms, Edmund, Dipl.-Ing., D-23623 Ahrensbök (DE)

(57) **Zusammenfassung**

Die Erfindung betrifft ein durch niedrige Schmelzkosten charakterisiertes sowie die Umweltbelastungen reduzierendes Verfahren und eine einfach funktionierende Einrichtung zum Schmelzen von eisenmetallischen Werkstoffen, insbesondere von Stahlschrott, in einem koksbeheizten Kupolofen zur Herstellung von Gußeisen. Verfahrensgemäß wird das Ofengas mit einer Temperatur von > 400 Grad Celsius in der Vorwärmzone teilweise abgezogen und in der Schmelz- und Überhitzungszone gleichzeitig mit > 23 Prozent Sauerstoff wieder zugeführt. Kennzeichnend ist weiterhin, daß die teilweise abgezogene Ofengasmenge bis zu 70 Prozent der beim Schmelzprozeß entstehenden Ofengase beträgt. Durch die Zuführung von Ofengas, insbesondere durch den CO-Gehalt des Ofengases, wird gasförmiger Brennstoff zugeführt, der mit dem Sauerstoff verbrennt. Die reduzierenden Bedingungen im gasbeheizten Kupolofen werden damit verstärkt, wodurch sich wiederum die metallurgischen Wirkungen verbessern.

## Beschreibung

Die Erfindung betrifft ein Verfahren und eine Einrichtung zum Schmelzen von eisenmetallischen Werkstoffen, insbesondere von niedriggekohlten, oxidationsanfälligen eisenmetallischen Einsatzstoffen, wie beispielsweise Stahlschrott, in einem koksbeheizten Kupolofen zur Herstellung von Gußeisen.

Der mit Heißwind betriebene Kupolofen, dessen Heißwind im Rekuperator erzeugt wird und der mit Rauchgas beaufschlagt ist, welches bei der Gichtgasverbrennung entsteht, ist die derzeitig verbreitetste Heißwindkupolofenausführung. Dieser Ofen ist auch für die Herstellung von Gußeisen bei Einsatz von hohen Anteilen an Stahlschrott geeignet. Bekannt ist es, daß im Heißwindkupolofen über das temperaturabhängige Boudouar-Gleichgewicht CO₂ + C --> CO thermodynamisch sowohl oxidierend als auch reduzierend auf die Einsatzstoffe wirkende Ofenbereiche entstehen. Eine Überhitzung des flüssigen Eisens hängt dabei vorwiegend von der Höhe der Füllkokssäule, d.h. von der Durchtropfzeit des geschmolzenden Eisens und vom realisierten Temperaturprofil in der Füllkokssäule, ab. Um eine möglichst hohe Überhitzung der Gußeisenschmelze zu erreichen, werden in der Oxidationszone beim Koksumsatz maximale Gastemperaturen angestrebt. Dies wird in der Praxis dadurch realisiert, indem die Verbrennungsluft bis zu 600 Grad Celsius vorgewärmt wird oder zusätzlich Sauerstoff eingeleitet wird. Es werden somit Gastemperaturen von 2000 bis 2200 Grad Celsius erreicht.

Höhere Temperaturen sind aufgrund der zunehmenden Dissoziationsneigung der Verbrennungsprodukte und der hohen Strömungsgeschwindigkeiten in der Überhitzungszone nicht erreichbar. Beim Schmelzen von niedriggekohltem Metallschrott hat der Heißwindkupolofen verfahrenstechnisch den Nachteil, daß im Düsenbereich eine stark oxidierende Ofenatmosphäre entsteht, die einen Siliziumabbrand bis zu 30 Prozent bewirkt. Ursache hierfür ist die heterogene Verbrennungsreaktion des Kokses. Nachteilig ist weiterhin die beim Schmelzen entstehende große spezifische Gichtgasmenge, welche wiederum einen hohen Anlagenaufwand für die Gaswirtschaft erfordert.

Alle derzeitig bekannten Neuentwicklungen haben ebenfalls Nachteile beim Schmelzen von niedriggekohlten, oxidationsanfälligen eisenmetallischen Eisenwerkstoffen. Beim sogenannte FAR-Ofen werden die eisenmetallischen Einsatzstoffe in einen Zentralschacht chargiert. Der Koks und Kalk werden über sechs um den Umfang symmetrisch angeordnete Füllschächte einem Gestell zugeführt. Die Verbrennungsluft, welche durch Spezialdüsen mit hoher Geschwindigkeit eingeblasen wird, wird nicht vorgewärmt. Die Verbrennungsluft wird aber mit bis zu 1,5 Prozent Sauerstoff angereichert.

Der FAR-Ofen ist so gesteuert, daß die Verbrennungsgase immer durch den Zentralschacht strömen und somit die eisenmetallischen Einsatzstoffe gut aufheizen. Durch eine Sekundärdüsenreihe werden die CO-haltigen Gase vor Eintritt in den Zentralschacht nachverbrannt. Die Nachteile des FAR-Ofens sind darin zu sehen, daß durch die Schüttung eine Vielzahl von gasdurchströmten Kanälen entsteht, welche nicht gleichmäßig mit heißer Verbrennungsluft versorgt werden können, wodurch keine vollständige Vermischung von Verbrennungsluft und -gas eintritt und somit auch keine vollständige Umsetzung des CO in CO₂ erfolgt. Das Abgas hat noch einen CO-Gehalt von > 0,1 Vol.-Prozent. Demgemäß ist zur Vermeidung von Umweltbelastungen auch hier ein relativ hoher Aufwand für die Gaswirtschaft erforderlich.

Beim Heißwindkupolofen mit Plasmabrenner wird wegen des hohen CO-Anteils und der erforderlichen Nachverbrennung die Verbrennungsluft zusätzlich herkömmlich vorgewärmt.

Der Plasmabrenner wird anschließend zur Erhitzung eines Teilstromes der Verbrennungsluft auf Temperaturen von 3000 bis 5000 Grad Celsius eingesetzt, womit jede beliebige Mischtemperatur eingestellt werden kann. Die Eingangstemperatur der Verbrennungsluft kann bis zu 1400 Grad Celsius betragen. Diese hohen Temperaturen erfordern eine reduzierende Fahrweise des Ofens. Die Nachteile des Heißwindkupolofens mit Plasmabrenner sind in den relativ hohen Stromkosten zu sehen, da hier indirekt elektrisch geschmolzen wird. Der CO₂- Ausstoß ist groß.

Zur Vermeidung des großen Gasausstoßes sind für diesen Ofentyp Modellvorstellungen als Zukunftsidee entwickelt worden. (Sonderdruck Gießerei 79 (1992) Nr.4, S.134 bis 143) Es soll ein geschlossener Gaskreislauf gebildet werden, in dem ein hocherhitztes Gas als Wärmeträger, z.B. über Plasmabrenner im Teilstrom, erzeugt wird, dann durch Vermischen mit dem Restgas auf die gewünschte Temperatur gebracht wird, das Gichtgas vollständig abgesaugt wird und nach seiner Reinigung dem Plasmabrenner wieder zur Erhitzung zugeführt wird. Nachteilig ist, daß zur Realisierung dieser Modellvorstellung ein hoher Anlagenaufwand, verbunden mit einem großen Platzbedarf, notwendig ist, und der Schmelzprozeß, bedingt durch die Herstellung einer künstlichen Ofengaszusammensetzung, nur durch zusätzliche Meß-, Steuer- und Regelungstechnik sicher geführt werden kann.

Der Erfindung liegt daher die Aufgabe zugrunde, ein durch niedrige Schmelzkosten gekennzeichnetes und den Siliziumabbrand vermeidendes Verfahren und eine einfach funktionierende Einrichtung zum sicheren Schmelzen von eisenmetallischen Werkstoffen, insbesondere von niedriggekohlten, oxidationsanfälligen eisenmetallischen Einsatzstoffen, wie Stahlschrott, in einem koksbeheizten Kupolofen zur Herstellung von Gußeisen zu entwickeln, welche eine geringe und CO-freie Gichtgasmenge entstehen lassen und somit die Umweltbelastungen stark reduzieren. Erfindungsgemäß wird die Aufgabe gelöst, indem das Ofengas mit einer Temperatur von > 400 Grad Celsius in der Vorwärmzone teilweise abgezogen wird und in der Schmelz- und Überhitzungszone zusammen mit > 23 Prozent, vorzugsweise mit 33 bis 48 Prozent, Sauerstoff wieder zugeführt wird. Ein weiteres Merkmal des erfindungsgemäßen Verfahrens besteht darin, daß die teilweise abgezogene Ofengasmenge bis zu 70 Prozent der beim Schmelzprozeß entstehenden Ofengase beträgt. Durch die Zuführung von Ofengas, insbesondere durch den CO-Gehalt des Ofengases, wird gasförmiger Brennstoff zugeführt, der mit dem Sauerstoff verbrennt. Die reduzierenden Bedingungen im koksbeheizten Kupolofen werden damit verstärkt, wodurch sich wiederum die metallurgischen Wirkungen verbessern. Vorteilhafterweise verringern sich die Gichtgasmenge und der Staubausstoß. Dies hat zur Folge, daß der gerätetechnische Aufwand und der Platzbedarf für die Gaswirtschaft kleiner sind.

Mit der erfindungsgemäßen Einrichtung gemäß den kennzeichnenden Merkmalen der Ansprüche 3 bis 8 ist eine kostengünstige und sichere Durchführung des Schmelzverfahrene sowie ein unkompliziertes Nachrüsten vorhandener Öfen garantiert. Durch die erfindungsgemäße Gestaltung des Düsenbereiches im Ofenmantel wird erreicht, daß sich bereits an der Düsenmündung das Ofengas mit dem Sauerstoff vermischt und eine Umsetzung von CO + O₂ in CO₂ einsetzt. Dies führt zur gewünschten Ofenatmosphäre und zu den metallurgischen Wirkungen.

Die Erfindung soll am Beispiel des Schmelzens von zwei Graugußlegierungen näher erläutert werden. Hierzu zeigen die zugehörigen Zeichnungen in :
- Figur 1 :: einen koksbeheizten Kupolofen mit erfindungsgemäßer Einrichtung im Schnitt
- Figur 2 :: eine weitere Ausführung der Einrichtung im Schnitt
- Figur 3 :: die erfindungsgemäße Gestaltung des Düsenbereiches im Ofenmantel im Schnitt

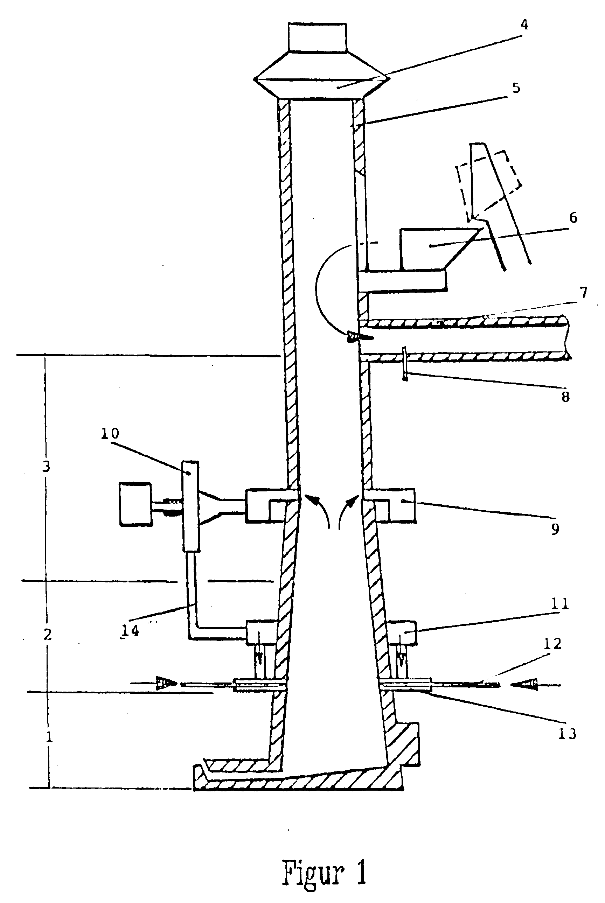

In Figur 1 ist ein koksbeheizter Kupolofen mit erfindungsgemäßer Einrichtung im Schnitt dargestellt. Sie zeigt, daß unterhalb der Beschickungseinrichtung 6 und der Untergichtabsaugung 7 ein Ofengasabsaugring 9 und oberhalb des Herdes 1 vier Düsen 13, die zentrisch geführte Sauerstofflanzen 12 haben, angeordnet sind, wobei der Ofengasabsaugring 9 durch einen Radialventilator 10, einen Kreislaufgaskanal 14 und einen Kreislaufgasring 11 mit den Düsen 13 verbunden ist.

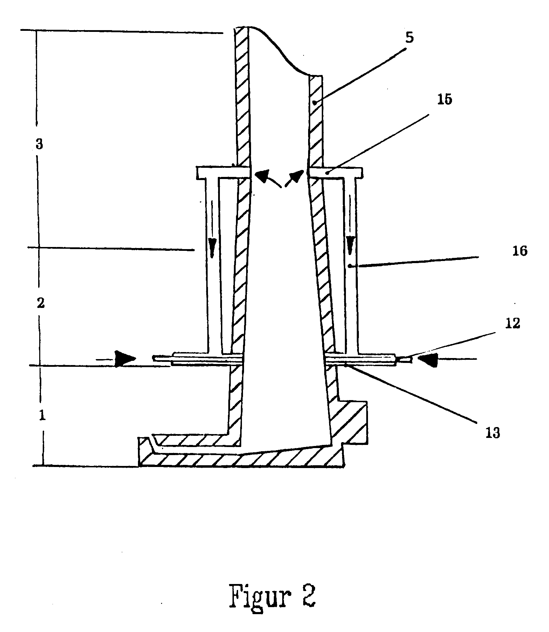

Figur 2 zeigt eine weitere Ausführung der Einrichtung im Schnitt. Kennzeichnend ist, daß hier unterhalb der Beschickungseinrichtung und der Untergichtabsaugung vier Ofengasabsaugöffnungen 15 um den Umfang des Ofenschachtes 5 angeordnet sind, die durch Kanäle 16 mit den über dem Herd 1 liegenden Düsen 13, die zentrisch geführte Sauerstofflanzen 12 haben, verbunden sind.

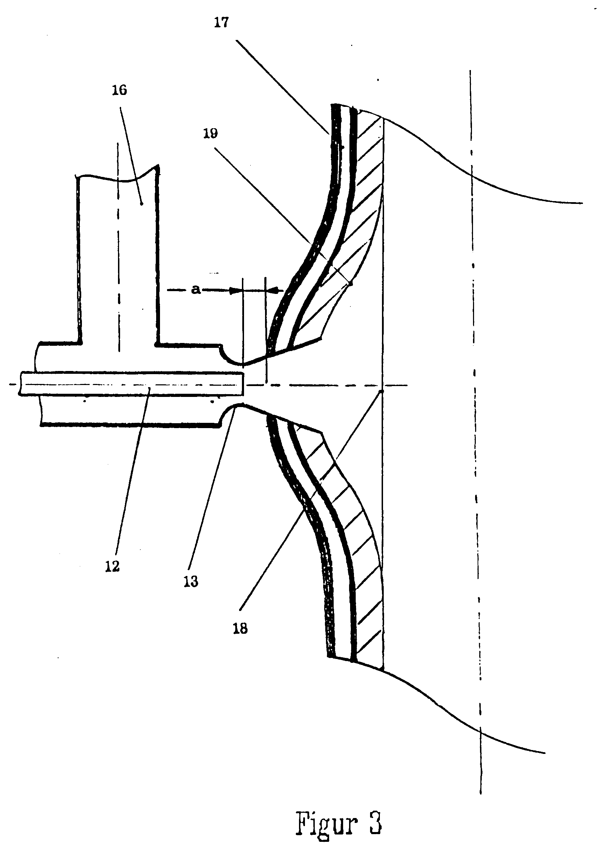

Figur 3 zeigt die erfindungsgemäße Gestaltung des Düsenbereiches im Ofenmantel im Schnitt. Der Ofenmantel 17 hat im Bereich der Düsenwirkungsrichtung 18 eine kalottenartige Erweiterung 19, und die in den Düsen 13 zentrisch geführten Sauerstofflanzen 12 haben einen Abstand a von 18 mm zum Ofenmantel 17. Eine derartige Anordnung von Düse und Sauerstofflanze wirkt als saugender Injektor, wie z. B. ein Gasstrahlverdichter.

Zum erfindungsgemäßen Schmelzen von Graugußlegierungen ist, wie nachstehend beschrieben, zu verfahren.

### Beispiel 1

Über die Beschickungseinrichtung 6 wird der koksbeheizte Kupolofen mit 50 % Gußbruch und 50 % Kreislaufmaterial beschickt.

Die Gattierunganalyse ergibt sich zu
3,42 % C 1,85 % Si 0,62 % Mn 0,50 % P und 0,11 % S. Der Eisenoxidanhang des Einsatzmaterials beträgt 2 %. Pro Satz werden 10,43 % Satzkoks, Stückgröße 60/90, zugegeben. Der anteilmäßige Füllkoks, Stückgröße 80/100, ergibt sich zu 1,81 % und als Flußmittel werden 20 % Kalkstein vom Satzkoks eingesetzt.

Durch den Radialventilator 10 werden vom Ofengasabsaugring 9 den Düsen 13 60 % des Ofengases, welches sich aus etwa 63 % CO und 37 % CO₂ sowie aus Restgas (H₂ und H₂O) zusammensetzt, dem Ofen wieder zugeführt.

Dieses Ofengas hat eine Temperatur von 550 Grad Celsius und verbrennt durch die gleichzeitige Zuführung von 33 % Sauerstoff, bezogen auf die zugeführte Gasmenge. Die dadurch im Schmelz- und Überhitzungsschacht reduzierend wirkenden metallurgischen Vorgänge ergeben eine Flüssigeisenanalyse von
3,64 % C 2,03 % Si 0,58 % Mn 0,50 % P und >0,11 % S. Die Aufkohlungsrate dieser stahlschrottfreien Gattierung ergibt sich somit zu 7 % relativ, die Aufsilizierung zu 10 % relativ und der Mn-Abbrand zu etwa 5 % relativ. Zur Aufkohlung werden 0,27 % des Satzkokses und zur Reduzierung des 2-prozentigen Rostanhanges 0,23 % des Satzkokses benötigt. Der effektive Schmelzkoksanteil beträgt 11,75 %. Durch die basische Ofenführung wird eine sukzessive Aufschwefelung des Gußeisens vermieden. Die Erfindung bewirkt eine Minimierung des Staubausstoßes auf ungefähr 40 % üblicher Staubauswürfe beim koksbeheizten Kupolofen. Von der Untergichtabsaugung 7 werden die restlichen Ofengase abgezogen, wobei die Zündeinrichtung 8 ein ständiges Zünden des Gichtgases und damit ein vollständiges Nachverbrennen gewährleistet. Demgemäß sind die nachgeschalteten Entstaubungseinrichtungen kleiner.

### Beispiel 2

Über die Beschickungseinrichtung 6 wird der koksbeheizte Kupolofen mit 25 % Gußspäne, 40 % Stahlschrott, darunter 30 % Schredderschrott, 32 % Kreislaufmaterial, 0,22 % FeSi Formlinge und 0,22 % FeMn Formlinge beschickt. Die Gattierungsanalyse ergibt sich zu 2,09 % C 1,18 % Si 0,55 % Mn 0.34 % P und 0,08 % S. Der Eisenoxidanhang des Einsatzmaterials beträgt 2 %. Pro Satz werden 10,43 % Satzkoks, Stückgröße 60/90, zugegeben. Der anteilmäßige Füllkoks, Stückgröße 80/100, ergibt sich zu 1,81 %. Als Flußmittel werden 20 % Kalkstein vom Satzkoksanteil eingesetzt. Von der Ofengasabsaugung 9 werden 60 % des Ofengases mit einer Temperatur von 480 Grad Celsius durch die Düsen 13 der Schmelz- und Überhitzungszone 2 wieder zugeführt, wobei dieses durch die gleichzeitige Zuführung von 33 % Sauerstoff, bezogen auf die zugeführte Gasmenge, verbrennt. Damit ergibt sich die Flüssigeisenanalyse von: 3,55 % C 1,40 % Si 0,60 % Mn 0,40 % P und > 0,10 S. Die Aufkohlungsrate dieser aus nur schwer zu schmelzenden Recyclingmaterialien bestehende Gattierung ergibt sich zu 71 % relativ. Der relative Si- Zubrand liegt bei etwa 10 % und der relative Mn-Abbrand bei ungefähr 5 %. Die Schwefelaufnahme resultiert zu 33 % aus dem Schwefel des Kokses bei saurer Ofenfahrweise. Zur Aufkohlung werden 1,67 % des Satzkokses und zur Reduzierung des Rostanhanges 0,23 % des Satzkokses verbraucht. Der effektive Schmelzkoksanteil ergibt sich zu 10,34 %. Die Rinneneisentemperatur beträgt 1500 Grad Celsius. Durch das Abziehen von 60 % Ofengas unterhalb der Gicht aus der Schüttsäule und einer Verbrennung mit Sauerstoff im Herdbereich des Ofens ergibt sich eine Minimierung des Staubausstoßes auf etwa 40 % des üblicherweise beim Kupolofenschmelzprozeß existierenden Staubauswurfes. Die restlichen nicht abgezogenen Ofengase werden vollständig nachverbrannt.

## Patentansprüche

1. Verfahren zum Schmelzen von eisenmetallischen Werkstoffen, insbesondere von niedriggekohlten, oxidationsanfälligen eisenmetallischen Einsatzstoffen, wie beispielsweise Stahlschrott, in einem koksbeheizten Kupolofen zur Herstellung von Gußeisen, dadurch gekennzeichnet, daß das Ofengas mit einer Temperatur von > 400 Grad Celsius in der Vorwärmzone teilweise abgezogen wird und in der Schmelz- und Überhitzungszone zusammen mit > 23 Prozent, vorzugsweise mit 33 bis 48 Prozent, Sauerstoff wieder zugeführt wird.

2. Verfahren nach Anspruch 1, dadurch gekennzeichnet, daß die teilweise abgezogene Ofengasmenge bis zu 70 Prozent der beim Schmelzprozeß entstehenden Ofengase beträgt

3. Einrichtung zur Durchführung des Verfahrens nach den Ansprüchen 1 und 2, dadurch gekennzeichnet, daß unterhalb der Beschickungseinrichtung (6) und der Untergichtabsaugung (7) ein Ofengasabsaugring (9) und oberhalb des Herdes (1) ein oder mehrere Düsen (13), die zentrisch geführte Sauerstofflanzen (12) haben, angeordnet sind, wobei der Ofengasabsaugring (9) durch eine Absaugeinrichtung (10), einen Kreislaufgaskanal (14) und einen Kreislaufgasring (11) mit den Düsen (13) verbunden ist.

4. Einrichtung nach Anspruch 3, dadurch gekennzeichnet, daß die Absaugeinrichtung (10) ein Lüfter, beispielsweise ein Radialventilator, ist.

5. Einrichtung zur Durchführung des Verfahrens nach den Ansprüchen 1 bis 3, dadurch gekennzeichnet, daß unterhalb der Beschickungseinrichtung (6) und der Untergichtabsaugung (7) mehrere Ofengasabsaugöffnungen (15) um den Umfang des Ofenschachtes (5) angeordnet sind, die durch Kanäle (16) mit den über dem Herd (1) liegenden Düsen (13), die zentrisch geführte Sauerstofflanzen (12) haben, verbunden sind.

6. Einrichtung nach den Ansprüchen 3 bis 5, dadurch gekennzeichnet, daß der Ofenmantel (17) im Bereich der Düsenwirkungsrichtung (18) eine kalottenartige Erweiterung (19) hat.

7. Einrichtung nach den Ansprüchen 3 bis 6, dadurch gekennzeichnet, daß die in den Düsen (13) zentrisch geführten Sauerstofflanzen (12) zum Ofenmantel (17) im Abstand a angeordnet sind.

8. Einrichtung nach Anspruch 7, dadurch gekennzeichnet, daß der Abstand a regelbar, jedoch mindestens 15 mm, ist.

9. Einrichtung nach Anspruch 5 und 6 dadurch gekennzeichnet, daß die Absaugeinrichtung ein Ejektor, beispielsweise ein Gasstrahlverdichter ist.
